# EUROPEAN PATENT APPLICATION

(11) **EP 3 104 263 A1**
(43) Date of publication of application: **14.12.2016**
(21) Application number: 15305908.4
(22) Date of filing: 12.06.2015
(51) Int. Cl.: G06F 3/048, H04L 12/58, G06F 3/023

(54) **IMPROVED MESSAGING SERVICE**

(71) Applicant: Orange, 75015 Paris (FR)
(72) Inventor: LE GOFF, Mikael, 29890 Kerlouan (FR)
(74) Representative: Cabinet Plasseraud

(57) **Abstract**

The invention relates to a method for receiving a user input on a user terminal providing a Graphical User Interface, GUI, the GUI displaying a plurality of adjacent elements, each element identifying a user contact and each element being selectable by the user, the method comprising:
detecting (200) selection of at least a first element by the user, the first element identifying a first user contact,
upon selection of the first element, providing (201) on the GUI a messaging input window for receiving a user entry to be communicated to the first user contact.

Providing the messaging input window comprises:
positioning the messaging input window in a predetermined location of the GUI that is independent on the first element selected by the user

## Description

The present invention generally relates to messaging services such as instant messaging services, Short Message Services, SMS, or Multimedia Message Services, MMS.

It finds applications in user terminals and, in particular while not exclusively, in mobile terminals such as laptops, touchpads, mobile phones and Smartphones.

Instant messaging applications or SMS applications generally provide a graphical user interface on a user terminal based on several levels:
- on a first level, the user accesses a list of elements identifying the recipient contacts for which messages have been previously exchanged. Usually, the elements are classified based on the date of the last exchanged message;
- upon selection of an element from the list, a second level sequentially shows the last messages that have been exchanged with the recipient contact associated with the selected element.

However, maintaining multiple conversations is cumbersome for the user when this multi-level approach is used. Indeed, the user has to, starting from the first level, select a given element to display the second level, and then go back to the first level to select another element, and so on.

To avoid these shortcomings, the patent application US2009/0254616 proposes to display multiple instant messaging conversations so that instant messages exchanged during several conversations are simultaneously viewable.

Several conversation panes are shown simultaneously.

According to the conversation exchange mode illustrated on Figure 6 of patent application US2009/0254616, every time a conversation pane is selected by the user, an input component is displayed right below the conversation pane. This however leads to time losses for the user and to decrease the battery level of the user terminal. Indeed, the conversation pane is dedicated to a single contact

(conversation pane) and the user has to restart drafting a message in case he has initially selected the wrong conversation pane.

Time is therefore lost and the battery level of the phone is decreased. In addition, in case the user wants to send a message to several contacts, he needs to draft a message for a first conversation pane and then copy-paste (or draft again) the same message in another conversation pane, which wastes times and battery.

There is a need to improve the situation.

To address this need, a first aspect of the present invention relates to a method for receiving a user input on a user terminal providing a Graphical User Interface, GUI, the GUI displaying a plurality of adjacent elements, each element identifying a user contact and each element being selectable by the user, the method comprising:
detecting selection of at least a first element by the user, the first element identifying a first user contact,
upon selection of the first element, providing on the GUI a messaging input window for receiving a user entry to be communicated to the first user contact.

Providing the messaging input window may comprise:
positioning the messaging input window in a predetermined location of the GUI that is independent on the first element selected by the user.

Because the position of the messaging input window does not depend on the selected element, correction by the user does not require creating a new window, and therefore, redrafting a user entry is not necessary.

According to some embodiments, providing the messaging input window may further comprise:
adding in the messaging input window a graphical indication identifying the first user contact.

The accuracy associated with the selection of the first element is thereby improved.

In some embodiments of the invention, upon selection of the first element, the first element can be differentiated from at least one displayed element that has not been selected.

The accuracy associated with the selection of the first element is thereby improved.

According to some embodiments, the messaging input window can be erased from the GUI upon validation by the user of an entry to be communicated to the first user contact.

Alternatively, and because the position of the messaging input window does not depend on the selected first element, the messaging input window can be maintained after validation by the user.

According to some embodiments, the method can further comprise, after providing the messaging input window on the GUI:
detecting selection of a second element by the user, the second element identifying a second user contact.

The messaging input window can be maintained and can be for receiving a user entry to be communicated to the first user contact and to the second user contact.

Several recipients can therefore be selected, even after starting drafting a user entry, and the configurability of the service is thereby enhanced. This also avoids having to make several successive selections and user entries, which would results in time and battery losses.

As a complement, the first element and the second element are differentiated from at the least one displayed element that has not been selected.

The accuracy associated with the selection of several recipients is thereby improved.

According to some embodiments, the size of the messaging input window can be varied based on a length of the user entry.

A second aspect of the invention concerns a computer program product comprising a computer readable medium having stored thereon computer program instructions loadable into a computing device and adapted to - when loaded into and executed by said computing device - cause the computing device to perform a method according to the first aspect of the invention.

A third aspect of the invention relates to a user terminal comprising:
- a display to provide a Graphical User Interface displaying a plurality of adjacent elements, each element identifying a user contact and each element being selectable by the user;
- a user interface to detect selection of at least a first element by the user, the first element identifying a first user contact;
- a processor arranged for, upon selection of the first element, controlling the display to provide on the GUI a messaging input window for receiving a user entry to be communicated to the first user contact.

The processor can be further configured for positioning the messaging input window in a predetermined location of the GUI that is independent on the first element selected by the user.

The present invention is illustrated by way of example, and not by way of limitation, in the figures of the accompanying drawings, in which like reference numerals refer to similar elements and in which:
- Figure 1 represents a system according to an embodiment of the invention;
- Figure 2 is a flowchart illustrating the steps of a method according to some embodiments of the invention;
- Figures 3a to 3e illustrate a graphical user interface of a user terminal according to some embodiments of the invention;
- Figure 4 shows a user terminal according to some embodiments of the invention.

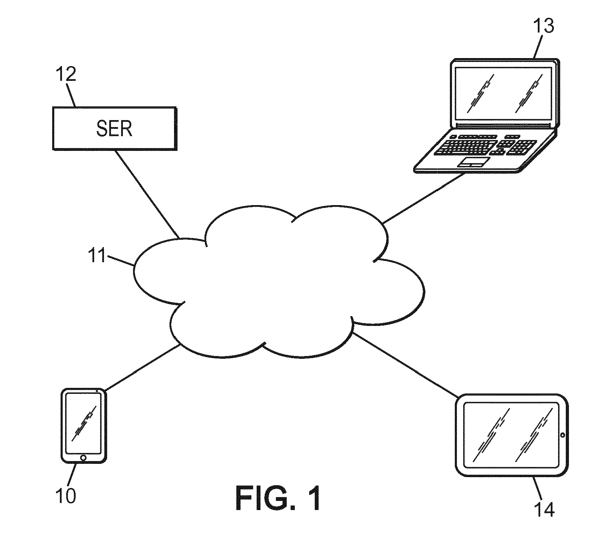

Figure 1 illustrates a system according to an embodiment of the invention.

The system comprises a user terminal 10 according to an embodiment of the invention. The user terminal 10 may be any device being able to access a network 11, via any wired (Ethernet for example) or wireless (Wi-Fi, 2G, 3G, 4G) means. For example, the user terminal may be a mobile terminal such as a laptop, a touchpad, a mobile phone or a Smartphone. In what follows, and for illustrative purposes only, the user terminal 10 is considered as being a Smartphone accessing the network 11.

The network 11 may be a data network such as the internet or may be a cellular network able to transport phone calls and messages.

The user terminal 11 can then access a remote server 12 In charge of managing communications between the user terminal 11 and other user terminals 13 and 14 (represented as a laptop 13 and a touchpad 14, for illustrative purposes only).

The remote server 12 is a server in charge of managing an instant messaging service. According to the present invention, the remote server 12 can alternatively be arranged for managing Short Message Services, SMSs, exchanged between user terminals 11 to 13. In what follows, we generally refer to messages communicated between user terminals 11 to 13.

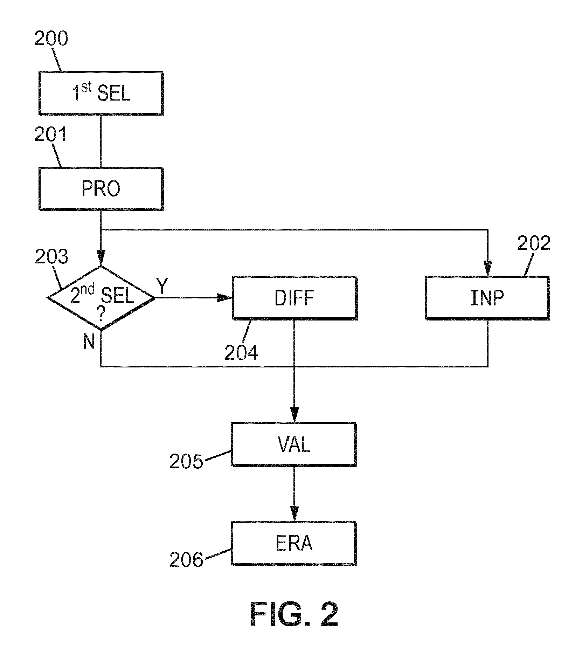

Figure 2 is a diagram illustrating the steps of a method according to an embodiment of the invention, carried out by the user terminal 11 illustrated on Figure 1. The user terminal 11 provides a Graphical User Interface, GUI, to the user. The GUI can for example correspond to an application stored and executed on the user terminal 11, and associated with the instant messaging service implemented by the server 12. Alternatively, in the example where the messages are SMSs, the GUI can be set up by the manufacturer of the user terminal 11.

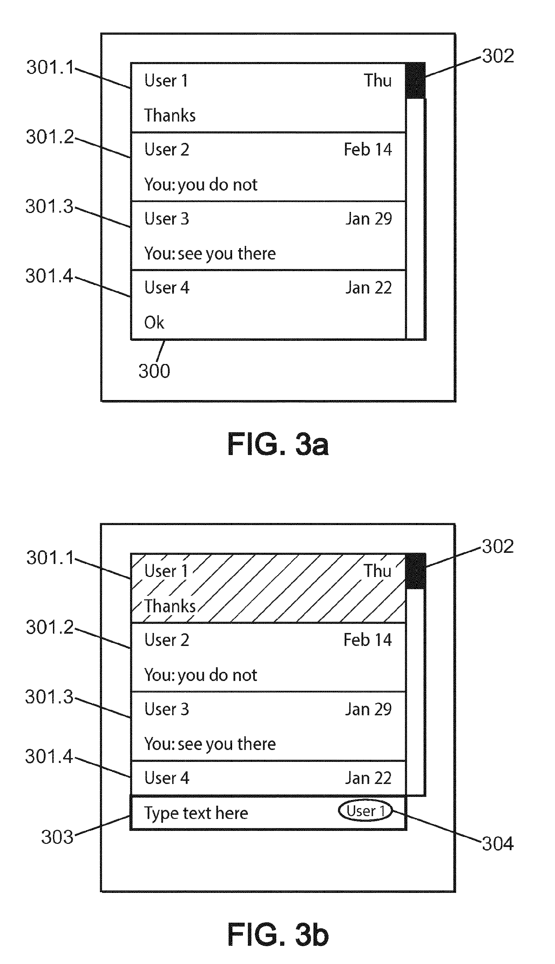

The GUI displays a plurality of adjacent elements, each element identifying a user contact and each element being selectable by the user. The GUI will be further described hereafter when referring to Figures 3a to 3e.

A user contact is defined by an identity of a contact of the user: a friend, a relative, a colleague, or any person related to the user. To create a user contact, the user can for example fill in fields respectively corresponding to a name, a first name, a phone number, an email address, a picture of the contact, or any information related to the contact.

At step 200, selection of at least one first element by the user is detected, the first element identifying a first user contact. When selecting a first user contact, the user expects to send a message to the user contact.

At step 201, the user terminal 11 provides, on the GUI, a messaging input window for receiving a user entry to be communicated to the selected first user contact. According to the present invention, step 201 comprises positioning the messaging input window in a predetermined location of the GUI that is independent on the first element selected by the user. This enables to avoid moving the other elements displayed on the GUI, as disclosed by patent application US2009/0254616.

Step 201 may also comprise :
- adding in the messaging input window a graphical indication identifying the first user contact. This enables to avoid erroneous input by the user; and/or
- differentiating the first element from at least one displayed element that has not been selected.

This enables to easily correct an erroneous input by the user (and avoids sending a message to the wrong contact).

At step 202, a user entry can be received in the messaging input window. No restriction is attached to the way the user entry is acquired or to the format of the user entry. For example, the format of the user entry can be text, a picture, an audio file, a video file, or any other media content. The user entry can be acquired using a microphone, using a browser to select files stored on the user device, or text can be acquired using a virtual or physical keyboard. Optionally, the size of the messaging input window may depend on a length of the user entry.

In parallel (during step 202), it is determined whether selection of a second element by the user is detected.

If selection of a second element by the user is detected at step 203, then the messaging input window is maintained at step 204 for receiving the user entry at step 202. Optionally, the second element can be differentiated (in a similar way as the first element has been differentiated for example) and another graphical indication identifying the second user contact can be added in the messaging input window.

At step 205, the user validates the user entry. For example, the window messaging unit can comprise a validation zone to be pressed or selected by the user. The user entry is then communicated to the selected first user contact, and to the selected second user contact in case it has been selected at step 203. At step 206, the messaging input window can be erased from the GUI and the order in which elements are displayed can be updated.

The method according to the invention will be better understood when referring to figures 3a to 3e, which illustrate a detailed embodiment of the invention.

Referring to figure 3a, a GUI 300 comprises four elements 301.1, 301.2, 301.3 and 301.4, each element identifying a user contact:
- element 301.1 identifies User1;
- element 301.2 identifies User2;
- element 301.3 identifies User3; and
- element 301.4 identifies User4.

As illustrated on figure 3a, each element identifies the user to which it corresponds : the identification can be a picture of the user contact, its phone number, an alias or its name for example. Each element can also comprise a snippet indicating the beginning of the last message that has been exchanged between the user and the user contact. In addition, each element may comprise an indication of the date (any combination of minute, hour, day, month, year) of the last message exchanged between the user and the user contact. The elements are also preferably ordered based on their respective dates, as can be seen on figure 3a.

The GUI may also comprise a scrolling bar 302 to access other elements of the list.

As already explained, each element is selectable by the user. For example, in case the user terminal 11 comprises a touch display, a touch input on one of the elements is interpreted as being a selection of said element.

Referring now to figure 3a, selection of the element 301.1 identifying User1 is detected, and a messaging input window 303 is displayed on the GUI 300. As can be seen, the messaging input window 303 is positioned at the bottom of the GUI (a predetermined location), which does not depend on the element that has been selected. For example, if the selected element were element 301.2, the messaging input window 303 would be located at the same place. No restriction is attached to the predetermined location of the messaging input window 303. For example, the messaging input window 303 can also be positioned at the top of the GUI 300.

On figure 3b, element 301.1 has been hatched to be differentiated from the other elements 301.2 to 302.4 that have not been selected yet. To be differentiated, a different color might also be used, or the character used for the text displayed in the element 301.1 might be written in bold letters. In addition, a graphical representation 304 of the selected user (User1) is displayed in the messaging input window 303.

The messaging input window 303 may also comprise a text inviting the user to input a user entry ("*Type text here"* on figure 3b).

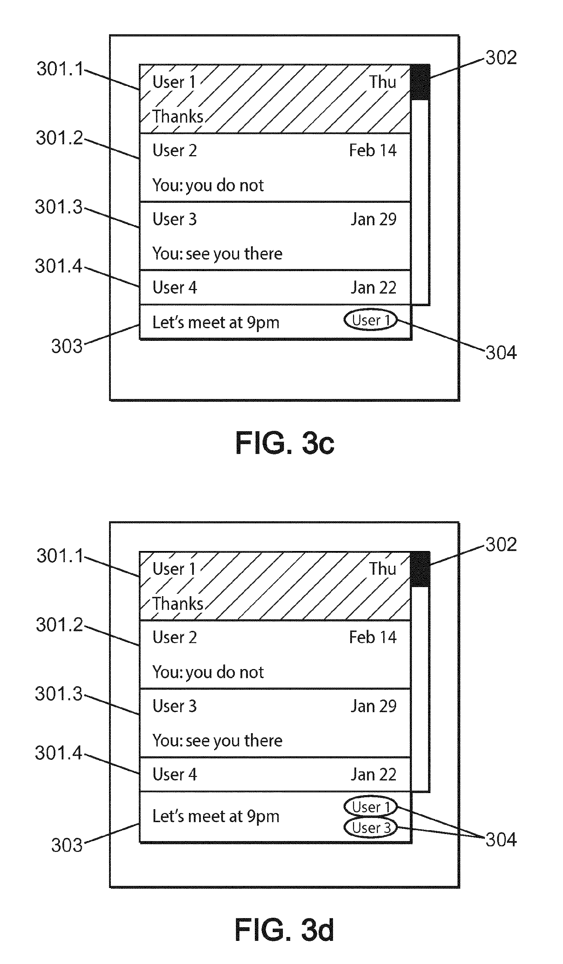

Referring now to Figure 3c, the user inputs a user entry to be communicated to the selected user (User1) in the messaging input window 303.

In the illustrated case, the user entry is a text message reading *"Let's meet at 9pm".*

As shown on figure 3d, the user selects a second element (element 301.3) identifying a second user contact (User3) to which the user entry is to be communicated. This second selection is detected, the messaging input window 303 is maintained, the selected second element 301.3 can be differentiated (hatched) and the graphical representation 304 is updated to further identify User3. Therefore, the fact of positioning the messaging input window 303 at a location that does not depend on the selected element, enables to reselect elements even after the user starts inputting the user entry.

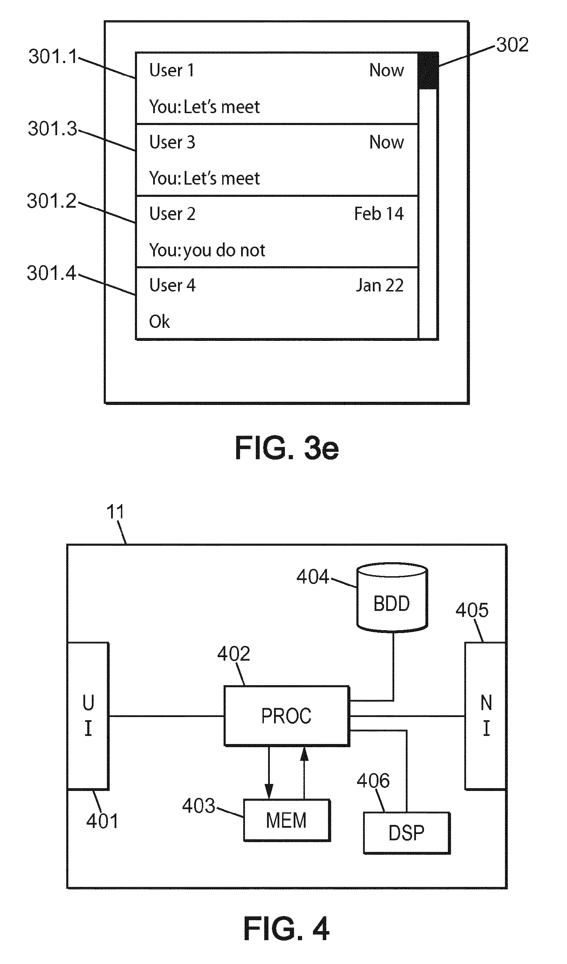

Once the user validates the user entry, the user entry is communicated to the user contacts via the network 11 and the messaging input window 303 can be erased from the GUI 300, as shown on figure 3e.

The respective snippets and dates of elements 301.1 and 301.3 are also updated and the order of elements 301.1 to 301.4 is updated, as shown on figure 3e.

Figure 4 shows a user terminal according to an embodiment of the invention.

The user terminal 11 comprises a random access memory 404 and a processor 203 that can store instructions for performing the steps of a method as described above.

The user terminal 11 may also comprise a database 405 for storing data resulting from the method according to the invention. For example, the database 205 may store the information related to the user contacts (name, picture, phone number, etc), and can also comprise multimedia files stored by the user.

The user terminal 11 comprises a user interface 401 for receiving selections and user entries by the user. The user interface 401 can for example comprise a touch display, a virtual or physical keyboard, press buttons, a camera and/or a microphone. The user terminal 11 also comprises a network interface 405 to communicate with the network and in particular to transmit the user entries to the selected user contacts. The network interface can be a wired interface (Ethernet) or wireless (2G, 3G, 4G, Wi-fi, etc).

The user terminal 11 also comprises a display 406 to provide the GUI illustrated above. The processor 402 is arranged to control the display to provide on the GUI the messaging input window, to erase said messaging input window, to differentiate and to update the elements.

## Claims

1. A method for receiving a user input on a user terminal (11) providing a Graphical User Interface (300), GUI, the GUI displaying a plurality of adjacent elements (301.1-301.4), each element identifying a user contact and each element being selectable by the user, the method comprising:
detecting (200) selection of at least a first element by the user, the first element identifying a first user contact,
upon selection of the first element, providing (201) on the GUI a messaging input window for receiving a user entry to be communicated to the first user contact,
the method being further **characterized in that** providing the messaging input window comprises:
positioning the messaging input window in a predetermined location of the GUI that is independent on the first element selected by the user.

2. The method according to claim 1, wherein providing (201) the messaging input window further comprises:
adding in the messaging input window a graphical indication identifying the first user contact.

3. The method according to claim 1 or 2, wherein, upon selection of the first element, the first element is differentiated from at least one displayed element that has not been selected.

4. The method according to anyone of the preceding claims, wherein the messaging input window is erased (206) from the GUI upon validation (205) by the user of an entry to be communicated to the first user contact.

5. The method according to anyone of the preceding claims, further comprising, after providing (201) the messaging input window on the GUI:
detecting (203) selection of a second element by the user, the second element identifying a second user contact;
wherein the messaging input window is maintained and is for receiving a user entry to be communicated to the first user contact and to the second user contact.

6. The method according to claims 3 and 5, the first element and the second element are differentiated (204) from at the least one displayed element that has not been selected.

7. The method according to anyone of the preceding claims, wherein the size of the messaging input window is varied based on a length of the user entry.

8. A computer program product comprising a computer readable medium having stored thereon computer program instructions loadable into a computing device and adapted to - when loaded into and executed by said computing device - cause the computing device to perform a method according to anyone of claims 1 to 7.

9. A user terminal (11) comprising:
- a display (406) to provide a Graphical User Interface (300) displaying a plurality of adjacent elements (301.1-301.4), each element identifying a user contact and each element being selectable by the user;
- a user interface (401) to detect selection of at least a first element by the user, the first element identifying a first user contact;
- a processor (402) arranged for, upon selection of the first element, controlling the display to provide on the GUI a messaging input window for receiving a user entry to be communicated to the first user contact;
**characterized in that** the processor is further configured for positioning the messaging input window in a predetermined location of the GUI that is independent on the first element selected by the user.
